# EUROPEAN PATENT APPLICATION

(11) **EP 4 603 915 A1**
(43) Date of publication of application: **20.08.2025**
(21) Application number: 25157403.4
(22) Date of filing: 12.02.2025
(51) Int. Cl.: G03G 15/04, B41J 2/47, B41J 2/45, G03G 15/043

(54) **OPTICAL SCANNING APPARATUS, METHOD OF MANUFACTURING AN OPTICAL SCANNING APPARATUS, AND IMAGE FORMING APPARATUS**

(30) Priority: 15.02.2024 JP 2024021361
(71) Applicant: Kyocera Document Solutions Inc., Osaka-shi, Osaka 540-8585 (JP)
(72) Inventor: Mizutani, Hideji, Osaka, 540-8585 (JP); Yoshida, Shingo, Osaka, 540-8585 (JP)
(74) Representative: BRP Renaud & Partner mbB Rechtsanwälte Patentanwälte Steuerberater

(57) **Abstract**

An optical scanning apparatus (5) includes a light source (26) having five or more light-emitting portions (LD1 to LD8) arrayed in a row, a cylindrical lens (42), a restricting portion (47), a polygon mirror (45), and a plurality of scanning lenses (49a, 49b). A plurality of such light sources (26) are provided and each emit light beams. The restricting portion (47) has a plurality of first apertures (43) that restrict the optical path width of the light beams along the sub scanning direction. The first apertures have first openings (43a) respectively that penetrate them along the optical axis direction and let the light beams pass through them. The centers of the first openings along the sub scanning direction are disposed displaced along the sub scanning direction (Z1-Z2).

## Description

### BACKGROUND

The present disclosure relates to an optical scanning apparatus, a method of manufacturing an optical scanning apparatus, and an image forming apparatus.

Some known optical scanning apparatuses employ a multi-beam system and include a light source having five or more light-emitting portions arrayed in a row, a cylindrical lens, a restricting portion, a polygon mirror, and a plurality of scanning lenses. The cylindrical lens converges the light beams emitted from the light-emitting portions. The restricting portion restricts the optical path width of the light beams that enter the cylindrical lens. The polygon mirror has a deflecting surface that reflects the light beams having passed through the cylindrical lens, and rotates about an axis to scan the scanned surface of an image carrying member in the main scanning direction. The plurality of scanning lenses image the light beams reflected from the polygon mirror on the scanned surface of the image carrying member.

The light beams emitted from the light-emitting portions are reflected on one deflecting surface to be imaged on the scanned surface. As the image carrying member rotates, the light beams reflected on the next deflecting surface are imaged on the scanned surface. The imaged light beams are arrayed at predetermined intervals along the sub scanning direction.

The scanning lenses are formed in a non-arc shape of which the shape on a sub scanning-direction section is defined by a polynomial containing a non-spherical coefficient. This suppresses scanning line curvature and surface curvature in the light beams imaged on the scanned surface.

With the known technology, if the rotation axis of the polygon mirror tilts and angular misalignment occurs, the angles of incidence of the light beams entering the scanning lenses change. This causes the light beams imaged on the scanned surface to be displaced along the sub scanning direction. This makes uneven the intervals between the imaged light beams along the sub scanning direction and may cause image defects such as color displacement.

An object of the present disclosure is to provide an optical scanning apparatus, a method of manufacturing an optical scanning apparatus, and an image forming apparatus that can prevent image defects while keeping manufacturing cost low.

### SUMMARY

To achieve the above object, according to one aspect of the present disclosure, an optical scanning apparatus includes a light source having five or more light-emitting portions arrayed in a row, a cylindrical lens, a restricting portion, a polygon mirror, and a plurality of scanning lenses. The cylindrical lens converges the light beams emitted from the light-emitting portions respectively. The restricting portion restricts the optical path width of the light beams entering the cylindrical lens. The polygon mirror has a deflecting surface that reflects the light beams having passed through the cylindrical lens, and rotates about an axis to scan, with the light beams, the scanned surface of an image carrying member along the main scanning direction. The plurality of scanning lenses image on the scanned surface of the image carrying member the light beams reflected from the polygon mirror. The light source comprises a plurality of light sources that emit light beams respectively. The restricting portion has a plurality of first apertures that restrict the optical path width of the light beams along the sub scanning direction. The plurality of first apertures respectively have first openings that penetrate along the optical axis direction to let the light beams pass through them. The centers of the first openings along the sub scanning direction are located displaced along the sub scanning direction.

To achieve the above object, according to another aspect of the present disclosure, a method is provided for the manufacture of an optical scanning apparatus including: a light source having five or more light-emitting portions arrayed in a row, a cylindrical lens, a first aperture, a polygon mirror, and a plurality of scanning lenses. The cylindrical lens converges the light beams emitted from the light-emitting portions respectively. The first aperture restricts the optical path width, along the sub scanning direction, of the light beams entering the cylindrical lens, and is movable along the sub scanning direction. The polygon mirror has a deflecting surface that reflects the light beams having passed through the cylindrical lens, and rotate about an axis to scan, with the light beams, the scanned surface of an image carrying member along the main scanning direction. The plurality of scanning lenses image on the scanned surface the light beams reflected from the polygon mirror. The method includes a beam pitch adjusting step. In the beam pitch adjusting step, the first aperture is moved along the sub scanning direction such that, of the light beams emitted from the light-emitting portions, the light beam imaged at one end of the scanned surface along the sub scanning direction and the light beam imaged at the other end of the scanned surface along the sub scanning direction are moved along the sub scanning direction, and thereby the intervals, along the sub scanning direction, between the light beams imaged on the scanned surface are adjusted all along the main scanning direction. In the beam pitch adjusting step, among the light beams emitted from the light-emitting portions, the movement directions along the sub scanning direction of the light beam imaged at the one end along the sub scanning direction and the light beam imaged at the other end along the sub scanning direction are reversed between in an upstream end part and in a downstream end part of the scanned surface along the main scanning direction.

This and other objects of the present disclosure, and the specific benefits obtained according to the present disclosure, will become apparent from the description of embodiments which follows.

### BRIEF DESCRIPTION OF THE DRAWINGS

Fig. 1 is a schematic sectional view showing the internal construction of an image forming apparatus 100 according to an embodiment of the present disclosure.
Fig. 2 is a top view of an optical scanning apparatus 5 according to the embodiment of the present disclosure.
Fig. 3 is a sectional view of the optical scanning apparatus 5 according to the embodiment of the present disclosure.
Fig. 4 is a sectional view, along the sub scanning direction, showing how a light beam D1 is imaged in the optical scanning apparatus 5 according to the embodiment of the present disclosure.
Fig. 5 is a sectional view schematically showing the configuration of the optical scanning apparatus 5 according to the embodiment of the present disclosure.
Fig. 6 is a perspective view of a light source unit 26 in the optical scanning apparatus 5 according to the embodiment of the present disclosure.
Fig. 7 is an illustrative diagram schematically showing scanning lines SL formed by the optical scanning apparatus 5 according to the embodiment of the present disclosure.
Fig. 8 is an illustrative diagram schematically showing the scanning lines SL formed by the optical scanning apparatus 5 according to the embodiment of the present disclosure.
Fig. 9 is a sectional view, along the sub scanning direction, showing the optical paths of light beams LB1 and LB8 in the optical scanning apparatus 5 according to the embodiment of the present disclosure.
Fig. 10 is a sectional view, along the sub scanning direction, showing the optical paths of light beams LB1 and LB8 in the optical scanning apparatus 5 according to the embodiment of the present disclosure.
Fig. 11 is a sectional view, along the sub scanning direction, showing the optical paths of light beams LB1 and LB8 in the optical scanning apparatus 5 according to the embodiment of the present disclosure.
Fig. 12 is a sectional view, along the sub scanning direction, showing, on an enlarged scale, the optical paths of light beams LB1 and LB8 in the optical scanning apparatus 5 according to the embodiment of the present disclosure.
Fig. 13 is a sectional view, along the sub scanning direction, showing, on an enlarged scale, how the light beams LB1 and LB8 are imaged in the optical scanning apparatus 5 according to the embodiment of the present disclosure.
Fig. 14 is a sectional view, along the sub scanning direction, showing a modified example of the optical paths of the light beams LB1 and LB8 in the optical scanning apparatus 5 according to the embodiment of the present disclosure.
Fig. 15 is a sectional view, along the sub scanning direction, showing a modified example of the optical paths of the light beams LB1 and LB8 in the optical scanning apparatus 5 according to the embodiment of the present disclosure.
Fig. 16 is a sectional view, along the sub scanning direction, showing, on an enlarged scale, how the light beams LB1 and LB8 are imaged in the optical scanning apparatus 5 according to the embodiment of the present disclosure.
Fig. 17 is a plan view of an intermediate transfer belt 8 in the image forming apparatus 100 according to the embodiment of the present disclosure.
Fig. 18 is a flow chart showing the steps performed in a method of manufacturing an optical scanning apparatus 5 according to the embodiment of the present disclosure.
Fig. 19 is an illustrative diagram schematically showing the scanning lines SL formed by the optical scanning apparatus 5 according to the embodiment of the present disclosure.

### DETAILED DESCRIPTION

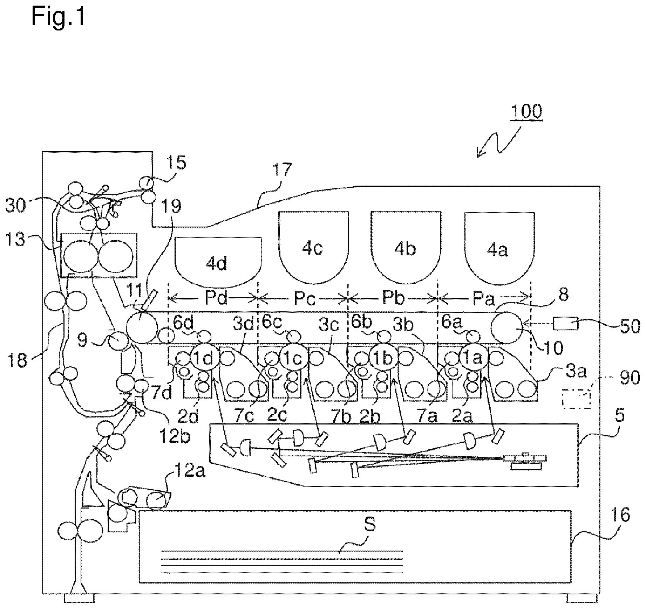

**1. Construction of an Image Forming Apparatus 100:** An embodiment of the present disclosure will be described below with reference to the accompanying drawings. Fig. 1 is a schematic sectional view showing the overall construction of an image forming apparatus 100 incorporating an optical scanning apparatus 5 according to the present disclosure. The image forming apparatus 100 includes the optical scanning apparatus 5, photosensitive drums (image carrying members) 1a to 1d, charging devices 2a to 2d, developing devices 3a to 3d, primary transfer rollers 6a to 6d, a secondary transfer roller 9, a sheet cassette 16, a fixing device 13, an image density sensor 50, and a control portion 90.

Specifically, the image forming apparatus 100 is a tandem-type color printer. In the body of the image forming apparatus 100, four image forming portions Pa, Pb, Pc, and Pd are disposed in this order from upstream (right in Fig. 1) in the conveyance direction. These image forming portions Pa to Pd are provided to correspond to images of four different colors (yellow, magenta, cyan, and black) and form a yellow, a magenta, a cyan, and a black image sequentially each through the processes of electrostatic charging, exposure to light, image development, and image transfer.

The image forming apparatus 100 includes, as image carrying members, the photosensitive drums 1a to 1d, which are rotatable. The photosensitive drums 1a to 1d are configured with an organic photosensitive member (OPC photosensitive member) having an organic photosensitive layer formed on it, an amorphous silicon photosensitive member having an amorphous silicon photosensitive layer formed on it, or the like. The photosensitive drums 1a to 1d are disposed in a tandem arrangement to correspond to the colors yellow, magenta, cyan, and black.

Around the photosensitive drum (image carrying member) 1a are disposed the developing device 3a, the charging device 2a, and a cleaning device 7a. Likewise, around the photosensitive drums (image carrying member) 1b to 1d are disposed the developing devices 3b to 3d, the charging devices 2b to 2d, and cleaning devices 7b to 7d respectively. Below the developing devices 3a to 3d, the optical scanning apparatus 5 is disposed.

The developing devices 3a to 3d are disposed opposite the photosensitive drums (image carrying members) 1a to 1d and have developing rollers (developer carrying members) 21a to 21d. The developing devices 3a to 3d apply a predetermined developing voltage to the developing rollers (developer carrying members) 21a to 21d to attach toner to electrostatic latent images formed on the photosensitive drums (image carrying members) 1a to 1d to form toner images. The developing devices 3a to 3d are disposed opposite the photosensitive drums 1a to 1d respectively and feed toner to the photosensitive drums 1a to 1d. The developing devices 3a to 3d have containers 4a to 4d and store magenta, cyan, yellow, and black toner respectively.

The charging devices 2a to 2d are disposed upstream of the developing devices 3a to 3d with respect to the rotation direction of the photosensitive drums 1a to 1d, opposite the surfaces of the photosensitive drums 1a to 1d respectively. The charging devices 2a to 2d electrostatically charge the surfaces of the photosensitive drums 1a to 1d uniformly.

The cleaning devices 7a to 7d remove the developer (toner) and the like that are left on the photosensitive drums 1a to 1d.

In the embodiment, the optical scanning apparatus 5 is disposed below the photosensitive drums 1a to 1d. According to image data of characters, patterns, and the like that is fed to an image input portion from a personal computer or the like, the optical scanning apparatus 5 shines light to (scans with light) the surfaces of the photosensitive drums 1a to 1d electrostatically charged uniformly by the charging devices 2a to 2d. This forms electrostatic latent images on the surfaces of the photosensitive drums 1a to 1d.

An intermediate transfer belt (belt) 8 is provided adjacent to the image forming portions Pa to Pd. The toner images formed on the photosensitive drums 1a to 1d are primarily transferred sequentially to the intermediate transfer belt 8 that moves while in contact with the photosensitive drums 1a to 1d to be overlaid on each other.

The toner images primarily transferred to the intermediate transfer belt 8 are secondarily transferred to a sheet S (recording medium) as one example of a recording medium by a secondary transfer roller 9. The sheet S having the toner images secondarily transferred to it has the toner images fixed in the fixing device 13 and is then discharged out of the body of the image forming apparatus 100.

Sheets S to which toner images are to be secondarily transferred are stored in a sheet cassette disposed in a lower part of the body of the image forming apparatus 100, and are conveyed via a sheet feed roller 12a and a pair of registration rollers 12b to a nip portion between the secondary transfer roller 9 and a driving roller 11 for the intermediate transfer belt 8. Downstream of the secondary transfer roller 9, a blade-form belt cleaner 19 is disposed that removes the toner and the like left on the surface of the intermediate transfer belt 8.

When image data is fed in from a host device such as a personal computer, first, the charging devices 2a to 2d electrostatically charge the surfaces of the photosensitive drums 1a to 1d uniformly. Next, the optical scanning apparatus 5 shines light according to the image data so as to form electrostatic latent images according to the image data on the photosensitive drums 1a to 1d. The developing devices 3a to 3d are loaded with predetermined amounts of two-component developer containing yellow, magenta, cyan, and black toner respectively. When as toner image formation proceeds as described later the proportion of the toner in the two-component developer loaded in the developing devices 3a to 3d falls below a prescribed value, toner is supplied from the containers 4a to 4d to the developing devices 3a to 3d. The toner in the developer is fed from the developing devices 3a to 3d onto the photosensitive drums 1a to 1d and electrostatically attaches to them. This forms toner images according to the electrostatic latent images formed by exposure to light from the optical scanning apparatus 5.

The primary transfer rollers 6a to 6d produce an electric field with a predetermined transfer voltage between the primary transfer rollers 6a to 6d and the photosensitive drums 1a to 1d so that the yellow, magenta, cyan, and black toner images on the photosensitive drums 1a to 1d are primarily transferred to the intermediate transfer belt 8. These images of four colors are formed in a predetermined positional relationship previously determined for the formation of a predetermined full-color image. After that, in preparation for subsequent formation of new electrostatic latent images, the toner and the like left on the surfaces of the photosensitive drums 1a to 1d are removed by the cleaning devices 7a to 7d.

The intermediate transfer belt 8 is stretched around a driven roller 10, disposed upstream, and a driving roller 11, disposed downstream. When a belt driving motor (not shown) rotates the driving roller 11 and as a result the intermediate transfer belt 8 starts to rotate clockwise, a sheet S is conveyed from the pair of registration rollers 12b, with predetermined timing, to a nip portion (secondary nip portion) between the driving roller 11 and the secondary transfer roller 9, the latter being disposed adjacent to the former, so that the full-color image on the intermediate transfer belt 8 is secondarily transferred to the sheet S. The sheet S having the toner image secondarily transferred to it is conveyed to the fixing device 13.

An image density sensor 50 is disposed opposite the driven roller 10 across the intermediate transfer belt 8. The image density sensor 50 is, for example, a sensor of a mirror surface reflection type that senses reflected light. The image density sensor 50 converts the result of its sensing into an electrical signal and feeds it to the control portion 90, which will be described later. The image density sensor 50 can be any sensor that can acquire density information on a toner image; it can be, for example, a sensor that senses density from an image acquired by shooting the toner image.

The sheet S conveyed to the fixing device 13 is heated and pressed by a fixing belt 21 and a pressing roller 2 so that the toner image is fixed to the surface of the sheet S to form the predetermined full-color image. The sheet S having the full-color image formed on it has its conveyance direction switched by a branch portion 30 that branches into a plurality of directions, and is then discharged as it is (or after being conveyed to a duplex conveyance passage 18 to have images formed on both sides) to a discharge tray 17 by a pair of discharge rollers 15.

The control portion 90 comprehensibly controls the image forming apparatus 100. Specifically, the control portion 90 controls the image forming portion. The image forming portion includes the optical scanning apparatus 5, the photosensitive drums (image carrying members) 1a to 1d, the charging devices 2a to 2d, and the developing devices 3a to 3d.

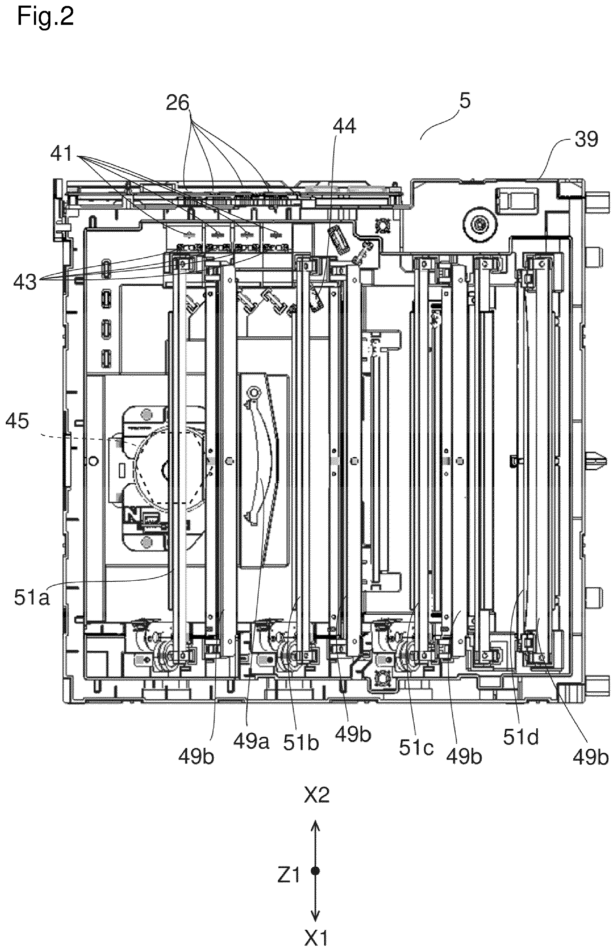

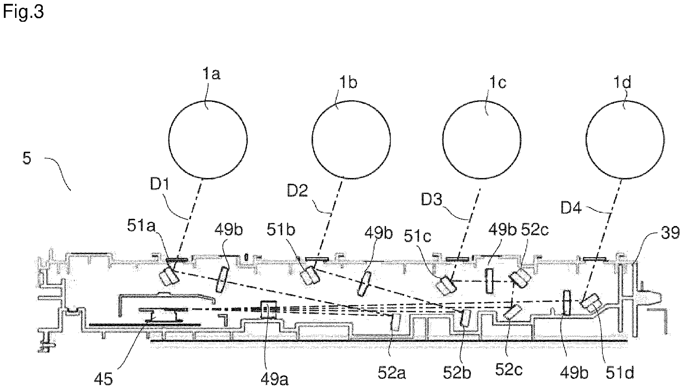

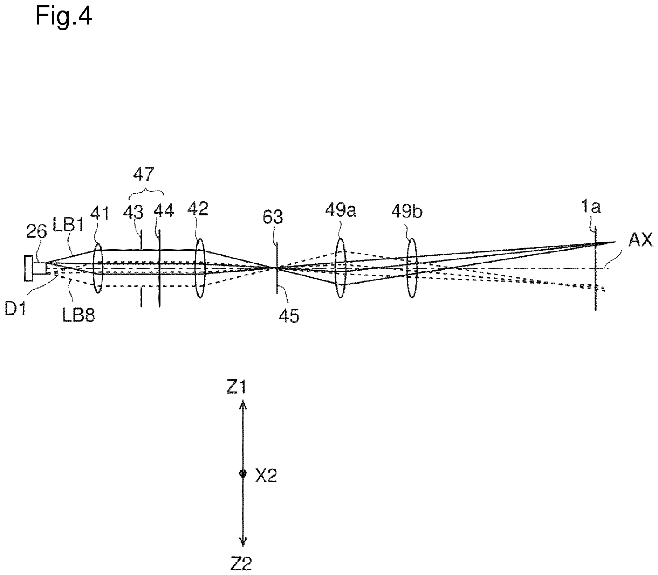

**2. Construction of the Optical Scanning Apparatus:** Fig. 2 is a top view of the optical scanning apparatus 5, showing it with a lid portion removed. Fig. 3 is a sectional view of the optical scanning apparatus 5, with scanning lenses 49b omitted. Fig. 4 is a sectional view, along the sub scanning direction, showing how a light beam D1 is imaged. In Fig. 3, the optical axis AX of a collimator lens 41, a cylindrical lens 42, and a plurality of scanning lenses 49a and 49b is indicated by dash-and-dot lines.

The optical scanning apparatus 5 includes a housing 39, a light source unit (light source) 26, a collimator lens 41, a cylindrical lens 42, a restricting portion 47, a polygon mirror 45, a plurality of scanning lenses 49a and 49b, exit mirrors 51a to 51d, and a reflection mirror 52.

In the embodiment, the light source unit 26 (light source) and the collimator lens 41 are provided one each at each of four places to correspond to the image forming portions Pa to Pd. The light source units (light sources) 26 irradiate the image forming portions Pa to Pd with corresponding light beams D1 to D4 (see Fig. 3) respectively. A plurality of light source units (light sources) 26 are provided and the polygon mirror 45 reflects the plurality of light beams D1 to D4 emitted from the light source units 26 to scan the scanned surfaces of the photosensitive drums (image carrying members) 1a to 1d corresponding to those light source units 26 respectively. In this way, with one polygon mirror 45, a plurality of photosensitive drums 1a to 1d can be scanned, and this helps reduce the number of components and reduce the manufacturing cost of the optical scanning apparatus 5.

The collimator lens 41 shapes the light beams D1 to D4 emitted from the light source units 26 into substantially parallel light beams (collimated beams).

The cylindrical lens 42 has a refractive power only along the sub scanning direction of the light beams D1 to D4, and converges the light beams D1 to D4 emitted from laser diodes LD1 to LD8 (light-emitting portions), which will be described later. The light source units 26, the collimator lens 41, and the cylindrical lens 42 are disposed in a straight line.

The restricting portion 47 is a plate-form member disposed between the collimator lens 41 and the cylindrical lens 42. The restricting portion 47 restricts the optical path width of the light beams D1 to D4 that have passed through the collimator lens 41 and then enter the cylindrical lens 42. In the embodiment, the restricting portion 47 has a first aperture 43 and a second aperture 44. Four first apertures 43 are disposed to correspond to the light source units (light sources) 26 respectively. The second aperture 44 is provided at one place to be shared by the light source units (light sources) 26. This helps reduce the number of components of the second aperture 44 and reduce the manufacturing cost of the optical scanning apparatus 5.

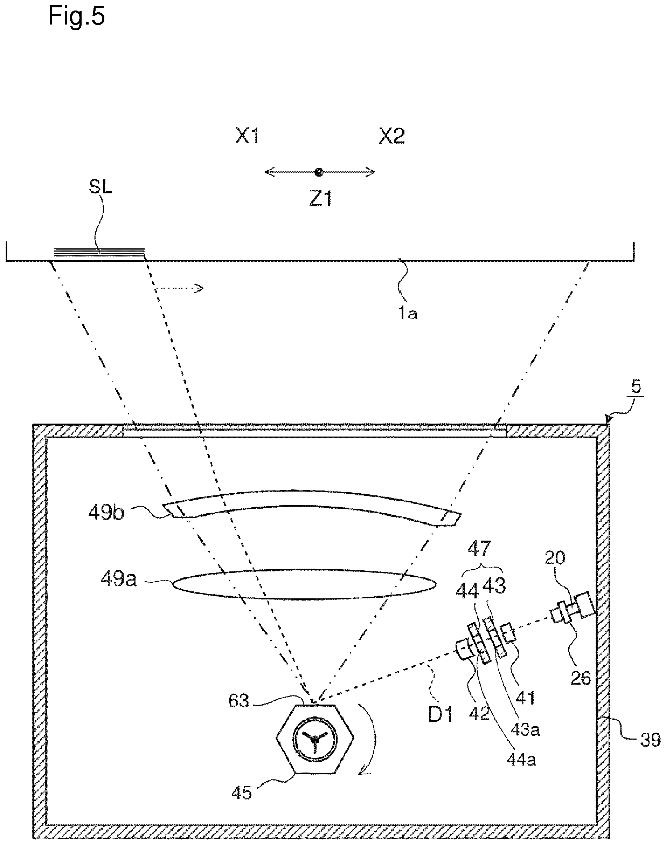

The polygon mirror 45 has a deflecting surface 63 that reflects the light beams D1 to D4 having passed through the cylindrical lens 42, and rotates about an axis to scan the scanned surfaces of the photosensitive drums (image carrying members) 1a to 1d with the light beams D1 to D4 along the main scanning direction (X1-X2 direction) (see Fig. 5).

The scanning lenses 49a and 49b are f-theta lenses. The scanning lens 49a is provided at one place to be shared by the photosensitive drums 1a to 1d. The scanning lens 49b is provided one at each of four places to correspond to the photosensitive drums 1a to 1d (see Figs. 2 and 3). The scanning lenses 49a and 49b are disposed between the photosensitive drums 1a to 1d and the polygon mirror 45, and image the light beam LB reflected from the polygon mirror 45 on the scanned surfaces of the corresponding photosensitive drums (image carrying members) 1a to 1d.

The light beams D1 to D4 are deflected by the polygon mirror 45 to achieve scanning along the main scanning direction (X1-X2 direction). The light beams D1 to D4 deflected to scan by the polygon mirror 45 are directed, via optical elements such as the scanning lenses 49a and 49b and the reflection mirrors 52a to 52c, to the exit mirrors 51a to 51d. The light beams D1 to D4 reflected from the exit mirrors 51a to 51d are shone onto the photosensitive drums 1a to 1d in the image forming portions Pa to Pd respectively.

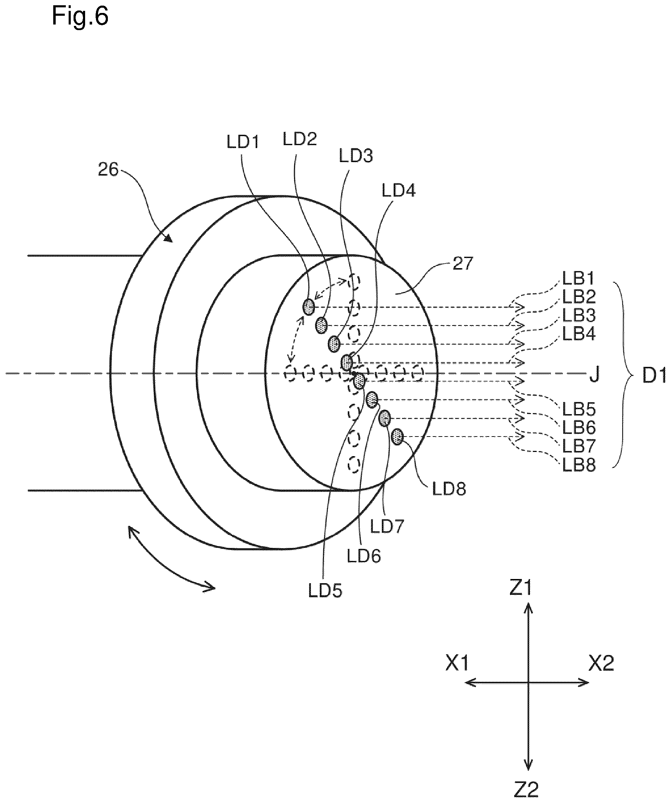

Fig. 5 is a sectional view schematically showing the configuration of the optical scanning apparatus 5, and Fig. 6 is a perspective view of the light source unit 26. While the optical scanning apparatus 5 scans each of the photosensitive drums 1a to 1d, the following description focuses on the optical scanning of the photosensitive drum 1a, and no overlapping description will be repeated.

Each light source unit (light source) 26 includes five or more laser diodes LD1 to LD8 (light-emitting portions) and a beam generation portion 20. In the embodiment, eight diodes (light-emitting portions) LD1 to LD8 are arrayed in a row and, preferably five or more laser diodes are provided. Increasing the number of laser diodes helps increase image resolution and reduce the rotation speed of the polygon mirror 45.

The laser diodes LD1 to LD8 have an exit surface 27 which is, for example, a circular flat surface. The light source unit 26 rotates in the circumferential direction about, as a rotation axis, an axis normal to the exit surface 27 that passes through its center (i.e., its center axis J).

The laser diodes LD1 to LD8 are disposed in a straight line at equal intervals along a diametrical direction of the light source unit 26. Based on image information transmitted from the control portion 90, the beam generation portion 20 generates light beams D1 that are emitted separately from the laser diodes LD1 to LD8 (in the following description, also referred to as light beams LB1 to LB8 individually).

Rotating the light source unit 26 permits adjustment of the intervals between the laser diodes LD1 to LD8 along the main scanning direction (X1-X2 direction) and along the sub scanning direction (Z1-Z2 direction). With the laser diodes LD1 to LD8 arranged in a straight line parallel to the sub scanning direction (Z1-Z2 direction), the intervals between the laser diodes LD1 to LD8 along the main scanning direction (X1-X2 direction) is minimum and the intervals between the laser diodes LD1 to LD8 along the sub scanning direction (Z1-Z2 direction) is maximum. By contrast, with the laser diodes LD1 to LD8 arranged in a straight line parallel to the main scanning direction (X1-X2 direction), the intervals between the laser diodes LD1 to LD8 along the main scanning direction (X1-X2 direction) is maximum and the intervals between the laser diodes LD1 to LD8 along the sub scanning direction (Z1-Z2 direction) is minimum (for both, see what is indicated by broken lines).

In the embodiment, the first aperture 43 is disposed nearer, than the second aperture 44, to the collimator lens 41. The first aperture 43 has a first opening 43a. The first opening 43a penetrates along the optical axis direction to let the light beams LB1 to LB8 pass through it. The optical axis direction is a direction parallel to the direction along which the optical axis AX of the cylindrical lens 42 extends (see Fig. 3). The light beams LB 1 to LB8 that pass through the first opening 43a have their optical path width along the sub scanning direction (Z1-Z2 direction) restricted. Specifically, the first aperture 43 restricts the optical path width of the light beams LB1 to LB8 along the sub scanning direction (Z1-Z2 direction). The first aperture 43 is movable along the sub scanning direction and is fixed at a predetermined position.

The second aperture 44 is disposed nearer, than the first aperture 43, to the cylindrical lens 42. The second aperture 44 has a second opening 44a. The light beams LB1 to LB8 passing through the second opening 44a have their optical path width along the main scanning direction (X1-X2 direction) restricted. The light beams LB1 to LB8 having passed through the first and second apertures 43 and 44 thus have a restricted beam width to have a stable beam spot diameter on the scanned surface of the photosensitive drum 1a.

The polygon mirror 45 has the shape of a right polygonal column (here, a right hexagonal column), with a deflecting surface 63 formed on each of its side faces. Each deflecting surface 63 is a mirror surface and can reflect and deflect the light beam D1 having passed through the cylindrical lens 42. The polygon mirror 45 is supported so as to be rotatable about a center axis (not shown) extending along the top-bottom direction (the direction across the plane of Fig. 2). The polygon mirror 45 is connected to a polygon motor (not shown) and rotates by being fed with a rotational driving force from the polygon motor.

Driven by the polygon motor (not shown), the polygon mirror 45 rotates clockwise in the diagram at constant speed. Thus, with the light beam D1, the scanned surface of the photosensitive drum 1a is scanned at constant speed along the main scanning direction (X2 direction). As a result, on the scanned surface of the photosensitive drum 1a, a scanning line SL is formed that extends in a straight line along the main scanning direction (X1-X2 direction) (see Fig. 5). Each deflecting surface 63 produces one scanning line SL. As the polygon mirror 45 rotates, the light beam D1 is imaged on one after another of the deflecting surfaces 63 that are adjacent to each other. Since the photosensitive drum 1a rotates, a plurality of scanning lines SL are formed along the sub scanning direction (Z1-Z2 direction) to form an electrostatic latent image.

The light beams LB1 to LB8 emitted from the light source units 26 travel via the collimator lens 41, the first aperture 43, the second aperture 44, and the cylindrical lens 42 in this order to be imaged as line images on the deflecting surface 63. The light beams LB1 to LB8 imaged on the deflecting surface 63 are deflected to pass through the scanning lenses 49a and 49b to be each imaged, with a predetermined spot diameter, on the photosensitive drum 1a.

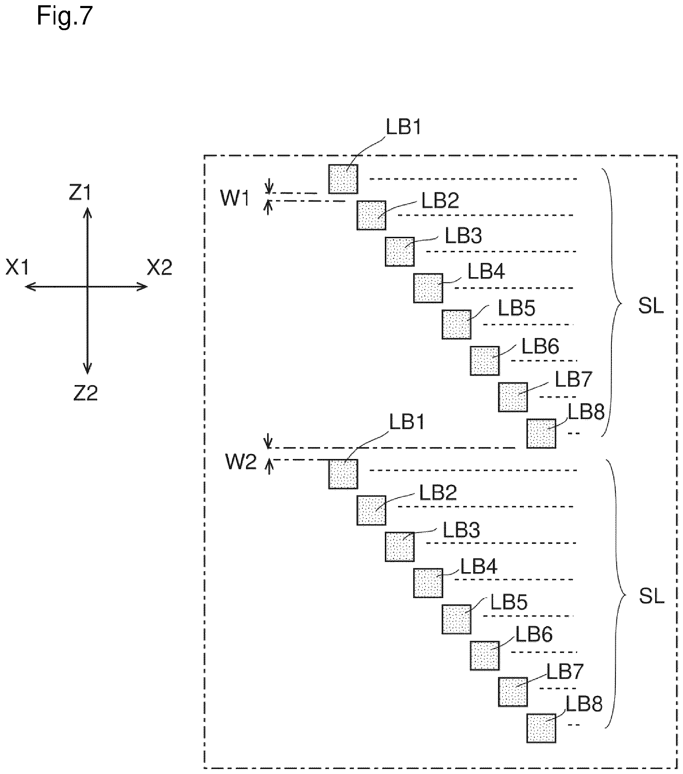

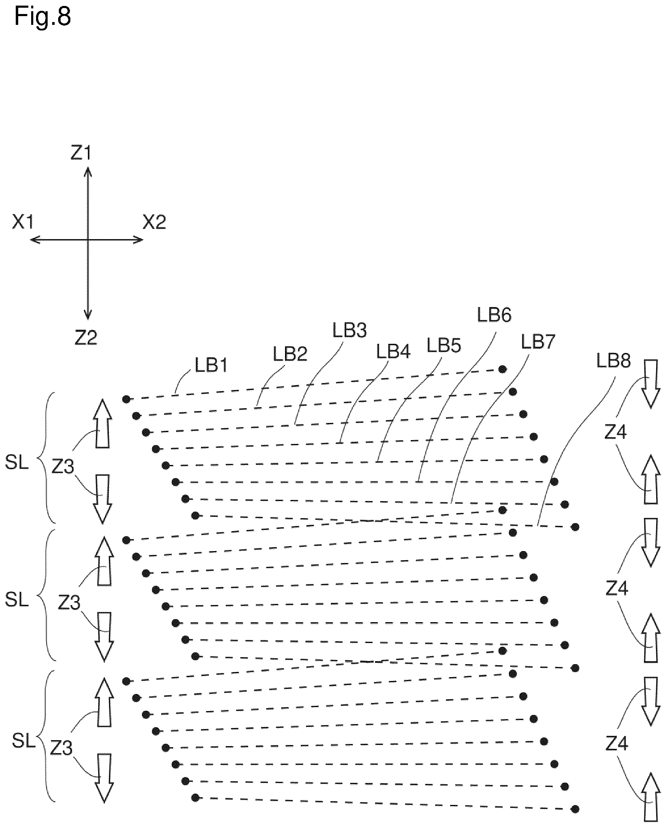

Figs. 7 and 8 are illustrative diagrams schematically showing scanning lines SL. As shown in Fig. 7, one scanning line SL is composed of light beams LB1 to LB8 imaged on the scanned surface of the photosensitive drum 1a. In one scanning line SL, the interval W1 between the imaged light beams LB1 to LB8 along the sub scanning direction (Z1-Z2 direction) can be changed by rotating the light source unit 26 about the center axis J in accordance with a predetermined image resolution (see Fig. 6). For example, if the resolution is 200 dpi, the interval W1 between the imaged light beams LB1 to LB8 along the sub scanning direction (Z1-Z2 direction) is set to about 21 µm.

If the rotation axis of the polygon mirror 45 leans and axial misalignment occurs, the interval W1 between the imaged light beams LB 1 to LB8 along the sub scanning direction (Z1-Z2 direction) changes. Specifically, if the polygon mirror 45 has axial misalignment, the angle of reflection of the light beams LB1 to LB8 on the deflecting surface 63 changes and also their angle of incidence on the scanning lenses 49a and 49b changes. Thus, the imaged positions of the light beams LB1 to LB8 on the scanned surface are displaced along the sub scanning direction (Z1-Z2 direction). As a result, the interval W1 between the imaged light beams LB1 to LB8 along the sub scanning direction (Z1-Z2 direction) changes. According, the width of the scanning line SL along the sub scanning direction (Z1-Z2 direction) changes.

Here, also the interval W2 between adjacent scanning lines SL along the sub scanning direction (Z1-Z2 direction) (the interval along the sub scanning direction (Z1-Z2 direction) between the light beams LB8 and LB1 that are adjacent to each other) changes. Thus, the intervals W1 and W2 are now different from each other and this makes uneven the intervals at which the light beams LB1 to LB8 that are arranged repeatedly along the sub scanning direction (Z1-Z2 direction) are imaged. This can cause an image defect.

For example, if the interval W1 increases, the interval W2 decreases; if the interval W1 decreases, the interval W2 increases. As the number of light beams emitted from the light source unit 26 increases, the unevenness between the intervals W1 and W2 grows.

Moreover, as shown in Fig. 8, if the interval W1 is increasingly large downstream X2 along the main scanning direction, the light beams LB1 and LB8 may be reversed along the sub scanning direction (Z1-Z2 direction) in a downstream X2 end part.

By contrast, in the embodiment, the first aperture 43 is moved along the sub scanning direction (Z1-Z2 direction) to displace in that direction the imaged positions of the light beams LB1 to LB8 imaged on the scanned surface. This changes the angles of reflection of the light beams LB1 to LB8 on the deflecting surface 63 and permits adjustment of the intervals W1 and W2.

More specifically, among the light beams emitted from the laser diodes (light-emitting portions) LD1 to LD8, the movement directions along the sub scanning direction (Z1-Z2 direction) of the light beam LB1 imaged at the upper end along the sub scanning direction (the end at one side Z1 along the sub scanning direction) and the light beam LB8 imaged at the lower end along the sub scanning direction (the end at the other side Z2 along the sub scanning direction) are reversed along the sub scanning direction (Z1-Z2 direction) between in an upstream X1 end part and in a downstream X2 end part of the scanned surface along the main scanning direction. That is, for each scanning line SL, the light beams LD1 to LD4, on one hand, and the light beams LD5 to LD8, on the other hand, are moved in a direction (arrow Z3 in Fig. 8) away from each other in the upstream X1 end part of the scanned surface along the main scanning direction, and are moved in a direction (arrow Z4 in Fig. 8) toward each other in the downstream X2 end part of the scanned surface along the main scanning direction.

Thus, in the upstream X1 end part along the main scanning direction, the intervals W1 between the light beams LB1 to LB8 increase and, in the downstream X2 end part along the main scanning direction, the intervals W1 between the light beams LB1 to LB8 decrease. In this way, the intervals at which the light beams LB1 to LB8 arranged repeatedly along the sub scanning direction (Z1-Z2 direction) are imaged can be made even all along the main scanning direction (X1-X2 direction).

In the embodiment, the foci of the light beams LB1 to LB8 through the scanning lenses 49a and 49b are located displaced from each other along the optical axis direction. Moreover, the displacements of the foci of the light beams LB1 to LB8 along the optical axis direction differ all along the main scanning direction (X1-X2 direction).

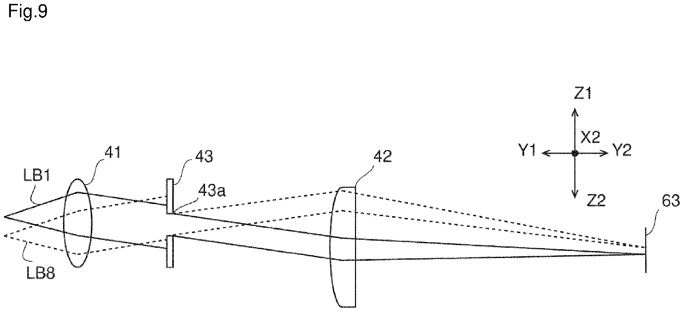

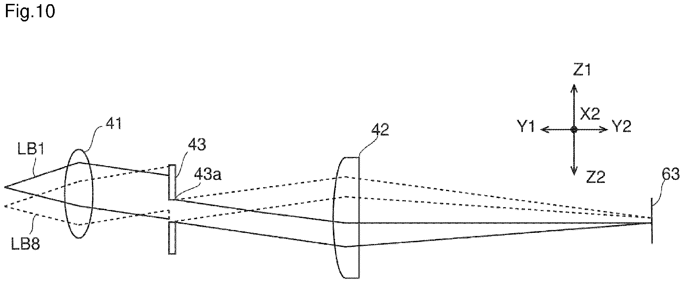

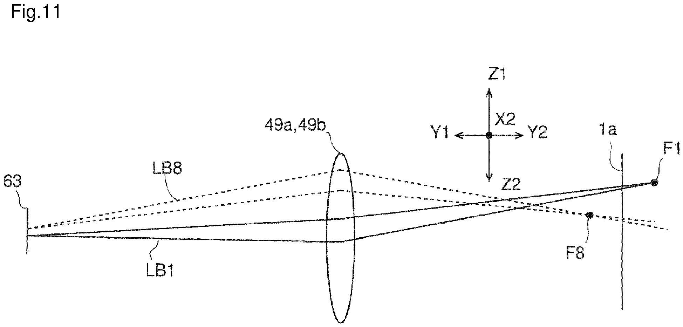

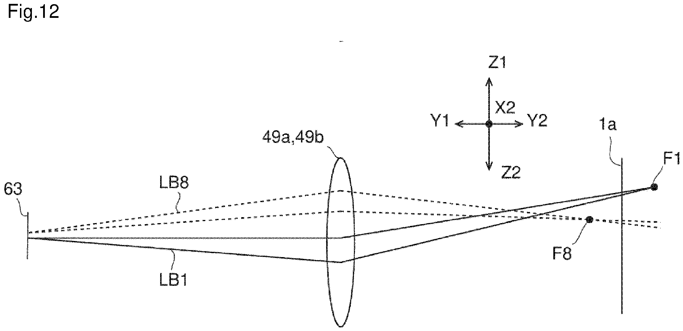

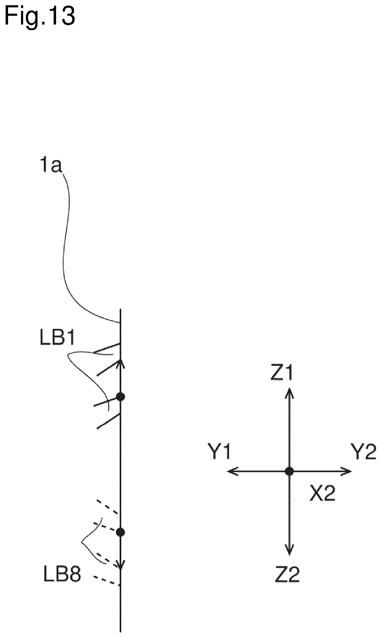

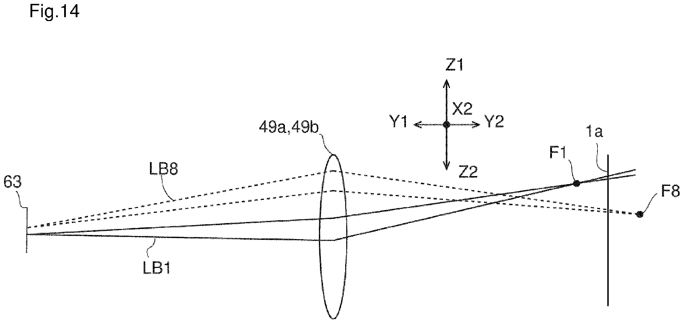

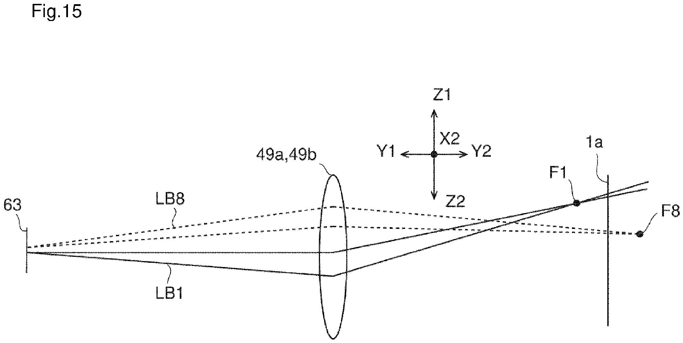

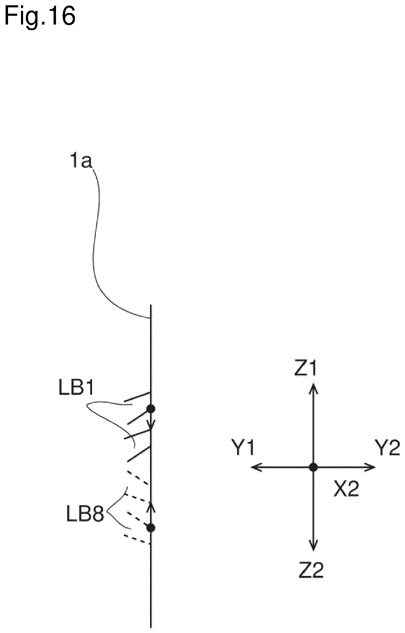

Figs. 9 to 12, 14, and 15 are sectional views along the sub scanning direction showing the optical paths of the light beams LB1 and LB8, and Figs. 13 and 16 are sectional views along the sub scanning direction showing, on an enlarged scale, how the light beams LB1 and LB8 are imaged in the optical scanning apparatus 5. Figs. 9 and 10 shows the light beams LB1 and LB8 after being emitted until striking the deflecting surface 63. Figs. 11, 12, 14, and 15 show the light beams LB1 and LB8 after being reflected from the deflecting surface 63 until being imaged on the scanned surface of the photosensitive drum 1a. Among these drawings, Figs. 11 and 12 show the optical paths of the light beams LB1 and LB8 in the upstream X1 end part along the main scanning direction, and Figs. 14 and 15 show the optical paths of the light beams LB1 and LB8 in the downstream X2 end part along the main scanning direction.

Figs. 9, 11, and 14 depict a state before the first aperture 43 is moved downward (to the other side Z2 along the sub scanning direction), and Figs. 10, 12, and 15 show the light beams LB1 and LB8 in a state after the first aperture 43 is moved downward (to the other side Z2 along the sub scanning direction). In Figs. 9 to 16, the light beam LB1 is indicated by solid lines and the light beam LB8 is indicated by broken lines. Note that, in Fig. 11 and 12, the scanning lenses 49a and 49b are shown as a single entity and that, in Figs. 9 and 10, the second aperture 44 is omitted from illustration.

The optical axis direction (Y1-Y2 direction) is the direction along which the optical axis AX (see Fig. 4) of the scanning lenses 49a and 49b extends, and the optical axis direction (Y1-Y2 direction) is orthogonal to the main scanning direction (X1-X2 direction) and to the sub scanning direction (Z1-Z2 direction). Upstream along the travel direction of the light beams LB1 and LB8 is assumed to be upstream Y1 along the optical axis direction, and downstream along the travel direction of the light beams LB1 and LB8 is assumed to be downstream Y2 along the optical axis direction.

In the embodiment, the scanning lenses 49a and 49b are configured such that, among the light beams LB1 to LB8 emitted from the laser diodes (light-emitting portion) LD1 to LD8, the first focus F1 of the light beam LB1 imaged at the upper end (at one side Z1 along the sub scanning direction) of the scanned surface of the photosensitive drum 1a and the second focus F8 of the light beam LB8 imaged at the lower end (at the other side Z2 along the sub scanning direction) of the scanned surface of the photosensitive drum 1a are located at opposite sides of the scanned surface along the optical axis direction. That is, the first focus F1 of the light beam LB1 and the second focus F8 of the light beam LB8 are located displaced along the optical axis direction.

Moreover, the scanning lenses 49a and 49b are configured such that the displacement between the first and second foci F1 and F8 along the optical axis direction differ all along the main scanning direction (X1-X2 direction). Specifically, the scanning lenses 49a and 49b are configured such that the first focus F1 in the upstream X1 end part along the main scanning direction is located farther (to one side along the optical axis direction), than the second focus F8, from the scanning lens 49b (see Figs. 11 and 12), and that the first focus F1 in the downstream X2 end part along the main scanning direction is located nearer (to the other side along the optical axis direction), than the second focus F8, to the scanning lens 49b (see Figs. 14 and 15),

More specifically, the foci of the light beams LB1 to LB4 are located displaced from each other along the optical axis direction and, in the embodiment, the foci of the light beams LB1 to LB4 imaged on the scanned surface, on one hand, and the foci of the light beams LB5 to LB8 imaged on the scanned surface, on the other hand, are located at opposite sides of the scanned surface along the optical axis direction.

In the upstream X1 end part along the main scanning direction, the foci of the light beams LB1 to LB4 are located farther (to one side along the optical axis direction), than the scanned surface, from the scanning lens 49b, and the foci of the light beams LB5 to LB8 are located nearer (to the other side along the optical axis direction), than the scanned surface, to the scanning lens 49b. On the other hand, in the downstream X2 end part along the main scanning direction, the foci of the light beams LB 1 to LB4 are located nearer (to the other side along the optical axis direction), than the scanned surface, to the scanning lens 49b , and the foci of the light beams LB5 to LB8 are located farther (to one side along the optical axis direction), than the scanned surface, from the scanning lens 49b. That is, the positional relationship between the foci of the light beams LB1 to LB4 and the foci of the light beams LB5 to LB8 in the upstream X1 end part along the main scanning direction is, with respect to the optical axis direction (Y1-Y2) direction, reversed to the positional relationship between the foci of the light beams LB1 to LB4 and the foci of the light beams LB5 to LB8 in the downstream X2 end part along the main scanning direction. Note that the light beams LB1 to LB8 are imaged each with blur on the scanned surface of the photosensitive drum 1a.

When the center of the first opening 43a of the first aperture 43 along the sub scanning direction is arranged so as to be displaced downward (to one side along the sub scanning direction) with respect to the optical axis, the light beams LB1 to LB8 that pass through the first opening 43a enter the cylindrical lens 42 with a downward (to the other side Z2 along the sub scanning direction) displacement. The light beams LB1 to LB8 that have passed through the cylindrical lens 42 are converged on the deflecting surface 63 (see Figs. 9 and 10). The light beams LB1 to LB8 converged on the deflecting surface 63 are reflected from it to enter the scanning lens 49a (see Figs. 11 and 12).

Here, the light beams LB1 to LB8 enter the scanning lens 49a with a downward (to the other side Z2 along the sub scanning direction) displacement and have smaller angles of incidence with respect to the scanning lens 49a. In the embodiment, the light beam LB1, which is the first beam that enters an upstream X1 end part of the scanning lens 49a along the main scanning direction, travels toward the first focus F1, which is located farther, than the scanned surface of the photosensitive drum 1a, from the scanning lens 49b (see Figs. 10 and 11). Here, the light beam LB1, which enters the scanning lens 49a with a downward (to the other side Z2 along the sub scanning direction) displacement, is displaced upward (to one side Z1 along the sub scanning direction) on the scanned surface of the photosensitive drum 1a (see Fig. 13). Though not shown, the light beams LB2 to LB4 imaged on the scanned surface are likewise displaced upward (to one side Z1 along the sub scanning direction).

On the other hand, the light beam LB8, which is the last beam that enters an upstream X1 end part of the scanning lens 49a along the main scanning direction, travels toward the second focus F8, which is located nearer, than the scanned surface of the photosensitive drum 1a, to the scanning lens 49b (see Figs. 11 and 12). Here, the light beam LB8, which enters the scanning lens 49a with a downward (to the other side Z2 along the sub scanning direction) displacement, is displaced downward (to the other side Z2 along the sub scanning direction) on the scanned surface of the photosensitive drum 1a (see Fig. 13). Moreover, though not shown, the light beams LB5 to LB7 imaged on the scanned surface are likewise displaced downward (to the other side Z2 along the sub scanning direction). Thus, in each scanning line SL, the light beams LB1 to LB4, on one hand, and the light beams LB5 to LB8, on the other hand, can be moved away from each other (arrow Z3 in Fig. 8) in the upstream X1 end part of the scanned surface along the main scanning direction.

The light beam LB1, which is the first beam that enters a downstream X2 end part of the scanning lens 49a along the main scanning direction, travels toward the first focus F1, which is located nearer, than the scanned surface of the photosensitive drum 1a, to the scanning lens 49b (see Figs. 14 and 15). Here, the light beam LB1, which enters the scanning lens 49a with a downward (to the other side Z2 along the sub scanning direction) displacement, is displaced downward (to the other side Z2 along the sub scanning direction) on the scanned surface of the photosensitive drum 1a (see Fig. 16). Though not shown, the light beams LB2 to LB4 that are imaged on the scanned surface are likewise displaced downward (to the other side Z2 along the sub scanning direction).

On the other hand, the light beam LB8, which is the last beam that enters a downstream X2 end part of the scanning lens 49a along the main scanning direction, travels toward the second focus F8, which is located farther, than the scanned surface of the photosensitive drum 1a, from the scanning lens 49b (Figs. 14 and 15). Here, the light beam LB8, which enters the scanning lens 49a with a downward (to the other side Z2 along the sub scanning direction) displacement, is displaced upward (to one side Z1 along the sub scanning direction) on the scanned surface of the photosensitive drum 1a. Though not shown, the light beams LB5 to LB7 that are imaged on the scanned surface are likewise displaced upward (to one side Z1 along the sub scanning direction). Thus, in each scanning line SL, the light beams LB1 to LB4, on one hand, and the light beams LB5 to LB8, on the other hand, can be moved toward each other (arrow Z4 in Fig. 8) in the downstream X2 end part of the scanned surface along the main scanning direction.

Thus, at the upstream X1 side of the scanned surface of the photosensitive drum 1a along the main scanning direction, the light beams LB1 to LB8 imaged there have an increased interval W1 between them along the sub scanning direction (Z1-Z2 direction) (see Fig. 13). Thus, at the upstream X1 side of the scanned surface of the photosensitive drum 1a along the main scanning direction, if angular misalignment of the polygon mirror 45 causes an increased interval W2 between adjacent scanning lines SL, by moving the first aperture 43 downward (to the other side Z2 along the sub scanning direction), it is possible to make the intervals W1 and W2 even.

On the other hand, at the downstream X2 side of the scanned surface of the photosensitive drum 1a along the main scanning direction, the light beams LB1 to LB8 imaged there have a reduced interval W1 between them along the sub scanning direction (Z1-Z2 direction) (see Fig. 16). Thus, at the downstream X2 side of the scanned surface of the photosensitive drum 1a along the main scanning direction, if angular misalignment of the polygon mirror 45 causes an increased interval W2 between adjacent scanning lines SL, by moving the first aperture 43 downward (to the other side Z2 along the sub scanning direction), it is possible to make the intervals W1 and W2 even. It is thus possible to make even the imaging intervals between the light beams LB1 to LB8 arranged repeatedly along the sub scanning direction (Z1-Z2 direction) and thereby prevent image defects. It is also possible to make even the imaging intervals between the light beams LB1 to LB8 all along the main scanning direction (X1-X2 direction) and thereby further prevent image defects.

In the embodiment, a plurality of light source units (light sources) 26 are provided and the light source units (light sources) 26 each emit light beams. A plurality of first apertures 43 are provided to correspond to the light source units (light sources) 26. In those first apertures 43, the center of the first opening 43a along the sub scanning direction is located displaced along the sub scanning direction. More specifically, the center of each first opening 43a along the sub scanning direction is located displaced along the sub scanning direction from the optical axis AX of the cylindrical lens 42. That is, the displacement along the sub scanning direction from the optical axis AX of the cylindrical lens 42 differs. Thus, image defects in the light source units (light sources) 26 of different colors can be prevented by moving the corresponding first apertures 43.

Next, a method of detecting an image defect will be described. An image defect caused by angular misalignment of the polygon mirror 45 can be easily detected by forming on the intermediate transfer belt 8 a patch image for calibration, then sensing the density of the patch image with an image density sensor (image sensor) 50, and then making the control portion 90 monitor the sensing result.

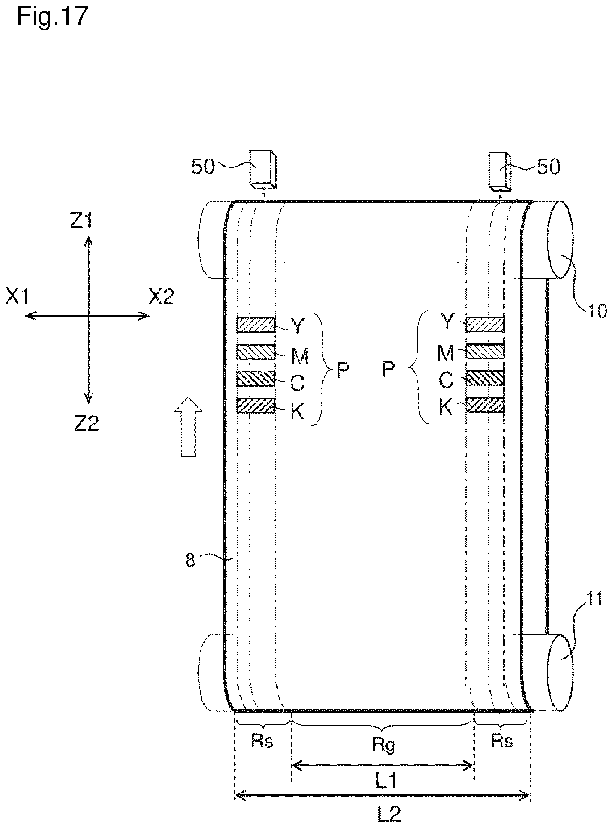

Fig. 17 is a plan view of a color displacement patch image formed on the intermediate transfer belt 8. The patch image (development pattern) P is disposed in an end part of the intermediate transfer belt 8 along the main scanning direction. For example, the patch image P is composed of reference images Y, M, C, and K of the colors yellow, magenta, cyan, and black.

The patch image P is formed in a reference image formation region Rs disposed in opposite end parts along the main scanning direction (belt width direction). The reference image formation region Rs is formed within a range readable by the image density sensor 50, outside an effective image formation region Rg along the main scanning direction. In the effective image formation region, image formation is possible up to the maximum sheet width useable on the image forming apparatus 100 (e.g., 13-inch wide).

The secondary transfer roller 9 (see Fig. 1) has an axial-direction length substantially equal to the width L1 of the effective image formation region Rg so that the patch image P may not attach to it. The primary transfer rollers 6a to 6d (see Fig. 1) has an axial-direction length substantially equal to the width L2 of the intermediate transfer belt 8, which is the sum of the widths of the effective image formation region Rg and the reference image formation region Rs, so that it can primarily transfer the patch image P to the reference image formation region Rs.

In the patch image P, a plurality of straight lines parallel to the main scanning direction (X1-X2 direction), which corresponds to the scanning line SL mentioned above, are disposed at equal intervals along the sub scanning direction (belt travel direction Z1).

The image density sensor (image sensor) 50 senses the image density of the patch image (development pattern) P formed in an end part of the intermediate transfer belt (belt) 8 along the main scanning direction (X1-X2 direction). Based on the sensing of the patch image (development pattern) P by the image density sensor 50, the control portion 90 detects an image defect, such as color displacement, in the toner image formed on the recording medium.

Specifically, when the polygon mirror 45 has angular misalignment, a plurality of parallel straight lines forming the reference images Y to K and extending along the main scanning direction (X1-X2 direction) have uneven intervals between them along the sub scanning direction (belt travel direction), and this causes an image defect (see Fig. 8). If this happens, the image density of the reference images Y to K sensed by the image density sensor 50 becomes abnormal. Based on the result of the sensing by the image density sensor 50, the control portion 90 recognizes an image defect. Thus, by monitoring the change of the density of the patch image P, it is possible to easily detect an image defect.

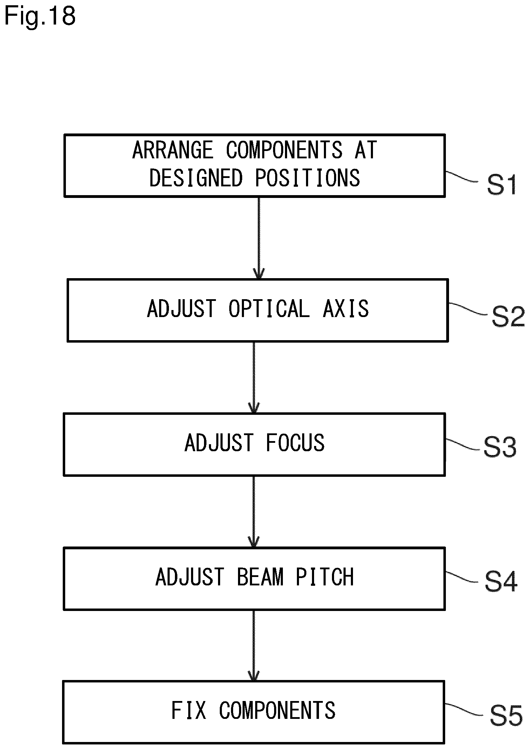

Next, a method of manufacturing the optical scanning apparatus 5 will be described. Fig. 18 is a flow chart showing the steps gone through in a manufacturing method for the optical scanning apparatus 5. The manufacturing method for the optical scanning apparatus 5 includes steps S1 to S5 as follows. First, the light source unit (light source) 26, the collimator lens 41, the cylindrical lens 42, the restricting portion 47, the polygon mirror 45, the plurality of scanning lenses 49a and 49b are arranged at their respective designed positions in the housing 39 (Step S1).

Subsequently, optical axis adjustment along the main and sub scanning directions is performed (Step S2). For example, by use of an image sensor, optical axis adjustment is performed so that the spots of the light beams LB1 to LB8 are located at predetermined positions. Here, the light source unit 26 is moved along the sub scanning direction (Z1-Z2 direction) to align the light beams LB1 to LB8 along the sub scanning direction (Z1-Z2 direction). Moreover, the light source unit 26 is moved along the main scanning direction (X1-X2 direction) to align the light beams LB1 to LB8 along the main scanning direction (X1-X2 direction).

Subsequently, focus adjustment along the main and sub scanning directions is performed (Step S3). For example, the light source unit 26 is moved along the optical axis direction so that the light beams LB1 to LB8 having passed through the collimator lens 41 become parallel light beams. Moreover, the light source unit 26 and the collimator lens 41 are moved together along the optical axis direction with their positional relationship maintained so that the light beams LB1 to LB8 are imaged as beam spots of a predetermined size on the scanned surface of the photosensitive drums 1a to 1d. In this way, focus adjustment is performed.

Subsequently, beam pitch adjustment is performed (Step S4). Beam pitch adjustment is performed by rotating the light source unit 26 so that the light beams LB1 to LB8 emitted from each light source unit 26 have an interval W1 along the sub scanning direction (Z1-Z2 direction) that suits the desired resolution. Moreover, if the rotation axis of the polygon mirror 45 leans and angular misalignment occurs, resulting in uneven beam pitches, as described above, by moving the first aperture 43 downward (to the other side Z2 along the sub scanning direction), it is possible to make even the intervals W1 and W2 between the light beams LB 1 and LB8. It is thus possible to prevent image defects.

Next, the light source unit (light source) 26, the collimator lens 41, the cylindrical lens 42, the restricting portion 47, the polygon mirror 45, the plurality of scanning lenses 49a and 49b are fixed to the housing 39 (Step S5).

According to the above-described manufacturing method for the optical scanning apparatus 5, among the light beams emitted from the laser diodes LD1 to LD8 (light-emitting portions), the movement directions, along the sub scanning direction (Z1-Z2 direction), of the light beam LB1 imaged at the upper end of the scanned surface along the sub scanning direction (the end at one side Z1 along the sub scanning direction) and the light beam LB8 imaged at the lower end of the scanned surface along the sub scanning direction (the end at the other side Z2 along the sub scanning direction) are reversed between in an upstream X1 end part and a downstream X2 end part of the scanned surface along the main scanning direction (beam pitch adjusting step). In this way, the intervals along the sub scanning direction (Z1-Z2 direction) between the light beams LB1 to LB8 imaged on the scanned surfaces of the photosensitive drums 1a to 1d with the first aperture 43 moved along the sub scanning direction (Z1-Z2 direction) are adjusted.

More specifically, when the first aperture 43 is moved along the sub scanning direction (Z1-Z2 direction), in the upstream X1 end part of the scanned surface along the main scanning direction, the light beams LB1 and LB8 are brought farther from each other along the sub scanning direction (Z1-Z2 direction) and, in the downstream X2 end part along the main scanning direction, the light beams LB1 and LB8 are brought closer to each other along the sub scanning direction (Z1-Z2 direction) (see Fig. 8).

Thus, even if the rotation axis of the polygon mirror 45 leans and axial misalignment occurs, resulting in uneven beam pitches, it is possible to make even the intervals W1 and W2 between the light beams LB1 to LB8 all along the main scanning direction (X1-X2 direction) and to prevent color displacement. It is thus possible to provide an optical scanning apparatus 5 that can prevent image defects while keeping the manufacturing cost low.

In the step of beam pitch adjustment, the distance over which the light beams LB 1 and LB8 are brought closer to or farther away from each other along the sub scanning direction (Z1-Z2 direction) when the first aperture 43 is moved along the sub scanning direction is larger in the downstream X2 end part along the main scanning direction than in the upstream X1 end part along the main scanning direction. Thus, in a case where the interval W1 increases downward X2 along the main scanning direction (see Fig. 8), it is possible to make even the intervals W1 and W2 between the light beams LB1 to LB8 all along the main scanning direction (X1-X2 direction) and thereby prevent color displacement.

The present disclosure is not limited by the embodiment described above and allows for any modifications without departure from the spirit of what is disclosed herein. For example, while in the embodiment the first aperture 43 is moved downward (to the other side Z2 along the sub scanning direction) to adjust the intervals between the light beams LB1 to LB8, it can instead be moved upward (to one side Z1 along the sub scanning direction) to adjust the intervals between the light beams LB1 to LB8.

While in the embodiment the first focus F1 of the light beam LB1 and the second focus F8 of the light beam LB8 are located at opposite sides of the scanned surface of the photosensitive drum 1a along the optical axis direction, the first focus F1 of the light beam LB1 and the second focus F8 of the light beam LB8 do not need to be located at opposite sides of the scanned surface of the photosensitive drum 1a along the optical axis direction.

While in the embodiment the first aperture 43 is moved along the sub scanning direction (Z1-Z2 direction) so that, at the upstream X1 side of the scanned surface along the main scanning direction, the light beams LB1 and LB8 are brought farther away from each other along the sub scanning direction (Z1-Z2 direction) and that, at the downstream X2 side along the main scanning direction, the light beams LB1 and LB8 are brought closer to each other along the sub scanning direction (Z1-Z2 direction), instead, only at the downstream X2 side along the main scanning direction, the light beams LB1 and LB8 can be brought closer to each other along the sub scanning direction (Z1-Z2 direction).

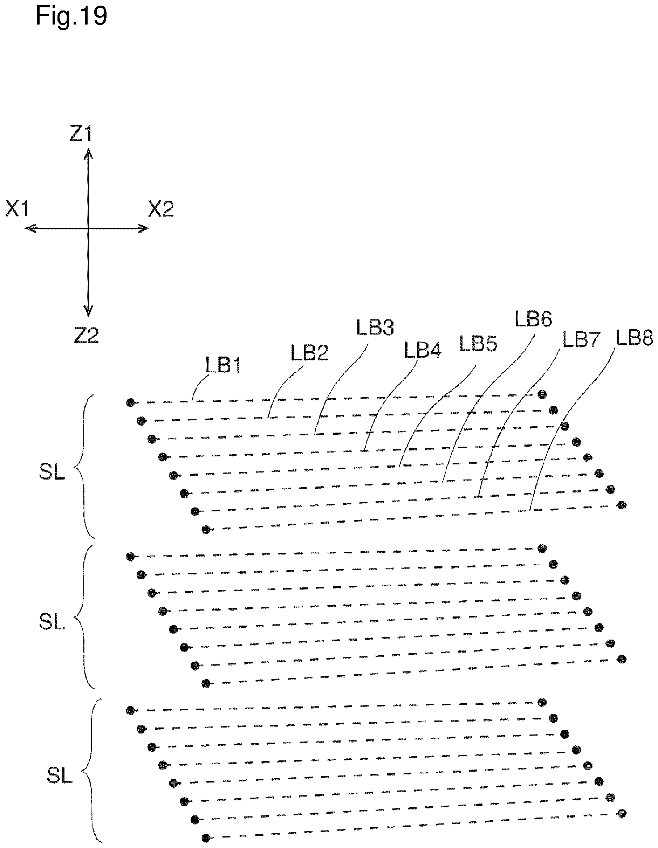

Fig. 19 is an illustrative diagram schematically showing scanning lines SL. If the rotation axis of the polygon mirror 45 leans and axial misalignment occurs, the interval W1 can be increasingly small downstream X2 along the main scanning direction. In that case, the first aperture 43 can be moved along the sub scanning direction (Z1-Z2 direction) so that, at the upstream X1 side of the scanned surface along the main scanning direction, the light beams LB1 and LB8 are brought closer to each other along the sub scanning direction (Z1-Z2 direction) and, at the downstream X2 side along the main scanning direction, the light beams LB1 and LB8 are brought farther away from each other along the sub scanning direction (Z1-Z2 direction). In this way, in a case where the interval W1 is increasingly small downstream X2 along the main scanning direction, it is possible to make even the intervals W1 and W2 between the light beams LB1 and LB8 all along the main scanning direction (X1-X2 direction) and to prevent color displacement. Instead, only at the downstream X2 side along the main scanning direction, the light beams LB1 and LB8 can be brought farther away from each other along the sub scanning direction (Z1-Z2 direction).

While the embodiment described above deals with, as an image forming apparatus 100, a color printer as shown in Fig. 1, it can be, instead of a color printer, any other image forming apparatus such as a monochrome or color copier, a digital multifunction peripheral, or a facsimile machine.

The present disclosure finds applications in optical scanning apparatuses and image forming apparatuses that employ a multi-beam system in which a photosensitive drum is scanned with light beams from a multi-beam laser having a plurality of light-emitting units.

## Claims

1. An optical scanning apparatus (5) comprising:
a light source (26) having five or more light-emitting portions (LD1 to LD8) arrayed in a row;
a cylindrical lens (42) that converges light beams (D1 to D4) emitted from the light-emitting portions respectively;
a restricting portion (47) that restricts an optical path width of the light beams entering the cylindrical lens;
a polygon mirror (45) having a deflecting surface (63) that reflects the light beams having passed through the cylindrical lens, the polygon mirror rotating about an axis to scan, with the light beams, a scanned surface of an image carrying member (1a to 1d) along a main scanning direction (X1-X2); and
a plurality of scanning lenses (49a, 49b) that image on the scanned surface of the image carrying member the light beams reflected from the polygon mirror,
wherein
the light source comprises a plurality of light sources that emit light beams respectively,
the restricting portion has a plurality of first apertures (43) that restrict the optical path width of the light beams along a sub scanning direction (Z1-Z2),
the plurality of first apertures are provided to correspond to the light sources respectively and respectively have first openings (43a) that penetrate along an optical axis direction to let the light beams pass therethrough, and
centers of the first openings along the sub scanning direction are located displaced along the sub scanning direction (Z1-Z2).

2. The optical scanning apparatus according to claim 1, wherein
the centers of the first openings along the sub scanning direction are located displaced along the sub scanning direction with respect to optical axes of the cylindrical lens.

3. The optical scanning apparatus according to claim 1, wherein
the scanning lenses are configured such that, among the light beams emitted from the light-emitting portions, a first focus (F1) of the light beam imaged at one end of the scanned surface along the sub scanning direction and a second focus (F2) of the light beam imaged at another end of the scanned surface along the sub scanning direction are located displaced along the optical axis direction, and
in an upstream end part along the main scanning direction, the first focus is located at one side of the second focus along the optical axis direction and, in a downstream end part along the main scanning direction, the first focus is located at another side of the second focus along the optical axis direction.

4. The optical scanning apparatus according to any one of claims 1 to 3, wherein
the light source comprises a plurality of light sources, and
the polygon mirror scans the scanned surface of the image carrying member corresponding to each of the light sources by reflecting the plurality of light beams emitted from the light sources.

5. The optical scanning apparatus according to any one of claims 1 to 4, wherein
the restricting portion further includes a second aperture (44) that restricts an optical path width of the light beams along the main scanning direction.

6. The optical scanning apparatus according to any one of claims 1 to 5, wherein
the restricting portion includes:
a plurality of the first apertures provided to correspond to the light sources respectively; and
a second aperture provided at one place to be shared among the light sources.

7. An image forming apparatus comprising
the optical scanning apparatus according to any one of claims 1 to 6;
a developing device (3a to 3d) that forms a toner image resulting from making visible an electrostatic latent image formed on the image carrying member by the optical scanning apparatus;
an endless belt (8) that moves along the developing device;
an image sensor (50) that senses an image density of a development pattern formed in an end part of the belt along the main scanning direction; and
a control portion (47) that, based on a result of sensing of the development pattern by the image sensor, detects an image defect in the toner image formed on a recording medium.

8. A method of manufacturing an optical scanning apparatus (5) including:
a light source (26) having five or more light-emitting portions (LD1 to LD8) arrayed in a row;
a cylindrical lens (42) that converges light beams (D1 to D4) emitted from the light-emitting portions respectively;
a first aperture (43) that restricts an optical path width, along a sub scanning direction (Z1-Z2), of the light beams entering the cylindrical lens, the first aperture being movable along the sub scanning direction,
a polygon mirror (45) having a deflecting surface that reflects the light beams having passed through the cylindrical lens, the polygon mirror rotating about an axis to scan, with the light beams, a scanned surface of an image carrying member (1a to 1d) along a main scanning direction (X1-X2); and
a plurality of scanning lenses (49a, 49b) that image on the scanned surface the light beams reflected from the polygon mirror,
the method comprising:
a beam pitch adjusting step in which, the first aperture is moved along the sub scanning direction (Z1-Z2) such that, of the light beams emitted from the light-emitting portions, the light beam imaged at one end of the scanned surface along the sub scanning direction and the light beam imaged at another end of the scanned surface along the sub scanning direction are moved along the sub scanning direction, and thereby intervals, along the sub scanning direction, between the light beams imaged on the scanned surface are adjusted all along the main scanning direction,
wherein
in the beam pitch adjusting step, among the light beams emitted from the light-emitting portions, movement directions along the sub scanning direction of the light beam imaged at the one end along the sub scanning direction and the light beam imaged at the other end along the sub scanning direction are reversed between in an upstream end part and in a downstream end part of the scanned surface along the main scanning direction.

9. The method according to claim 8, wherein
in the beam pitch adjusting step, the first aperture is moved along the sub scanning direction such that, among the light beams emitted from the light-emitting portions, the light beam imaged at the one end of the scanned surface along the sub scanning direction and the light beam imaged at the other end of the scanned surface along the sub scanning direction are brought closer to each other in one of, and farther away from each other in another of, the upstream and downstream end parts of the scanned surface along the main scanning direction.

10. The method according to claim 9, wherein
in the beam pitch adjusting step, a distance over which, among the light beams emitted from the light-emitting portions, the light beam imaged at the one end of the scanned surface along the sub scanning direction and the light beam imaged at the other end of the scanned surface along the sub scanning direction move along the sub scanning direction with the first aperture moved along the sub scanning direction is larger in a downstream end part than in an upstream end part of the scanned surface along the main scanning direction.
